(19) **Europäisches Patentamt / European Patent Office / Office européen des brevets**

(11) **EP 3 883 974 B1**

(12) # EUROPEAN PATENT SPECIFICATION

(45) Date of publication and mention
of the grant of the patent:
**03.09.2025 Bulletin 2025/36**

(21) Application number: **18940631.7**

(22) Date of filing: **23.11.2018**

(51) International Patent Classification (IPC):
*C08C 19/00* (2006.01)    *C08L 9/00* (2006.01)
*C08L 9/06* (2006.01)    *C08F 136/06* (2006.01)
*C08F 236/06* (2006.01)    *B60C 1/00* (2006.01)
*C08C 19/22* (2006.01)    *C08F 236/08* (2006.01)

(52) Cooperative Patent Classification (CPC):
(C-Sets available)
**C08C 19/25; B60C 1/00; B60C 1/0016;**
**C08C 19/22; C08F 136/06; C08F 236/08;**
**C08L 9/00;** B60C 2200/06; C08F 236/06    (Cont.)

(86) International application number:
**PCT/RU2018/000767**

(87) International publication number:
**WO 2020/106173 (28.05.2020 Gazette 2020/22)**

(54) **POLYMER COMPOSITION AND A METHOD FOR PREPARING THEREOF**

POLYMERZUSAMMENSETZUNG UND VERFAHREN ZUR HERSTELLUNG DAVON

COMPOSITION DE POLYMÈRES ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.09.2021 Bulletin 2021/39**

(73) Proprietor: **Public Joint Stock Company "Sibur
Holding"
Tyumen region 626150 (RU)**

(72) Inventors:
• **POLUKHIN, Evgeny Leonidovich
Voronezh, 394028 (RU)**
• **RUMIANTCEVA, Afina Leonidovna
Voronezh, 394038 (RU)**

• **POPOVA, Svetlana Borisovna
Rossosh, 396658 (RU)**
• **IARTSEVA, Tatiana Alexandrovna
Voronezh, 394033 (RU)**

(74) Representative: **Peters, Andreas
Hannke Bittner & Partner
Patent- und Rechtsanwälte mbB
Prüfeninger Straße 1
93049 Regensburg (DE)**

(56) References cited:
EP-A1- 2 452 951    EP-A1- 2 895 515
EP-A2- 2 003 146    WO-A1-2018/125733
RU-C1- 2 538 591    RU-C1- 2 667 061
RU-C2- 2 626 967

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)

C-Sets
**C08F 136/06, C08F 4/545;**
**C08F 236/06, C08F 4/56;**
**C08F 236/08, C08F 4/56;**
**C08L 9/00, C08L 15/00;**
C08F 236/06, C08F 212/08

## Description

### Field of the invention

The invention relates to the field of the industry of synthetic polymers used in the manufacture of tires, industrial rubber products, in the electrotechnical field and other fields; in particular, the invention relates to a polymer composition having a low content of vinyl groups, used in the production of tires, in particular, in the production of truck tires, and to a method for preparing thereof.

### Description of the related art

Natural rubber (NR) has a number of undoubted advantages providing its wide application in technics. Vulcanizates made of NR exhibit good strength properties, wear resistance, and resistance to multiple bending, in combination with high elasticity and frost resistance. High wet resistance of NR vulcanizates is especially attractive when this material is used as tread rubber for trucks. However, NR has several significant drawbacks, such as a high dependence of NR properties on the habitat of rubber plantations, non-firm yield of rubber plantations, limited raw material source, and inability to obtain NR on an industrial scale in northern latitudes. Since NR is the only rubber of the natural origin and its units have the predominant 1,4-cis-isoprene structure, at present, none of synthetic rubbers (SR) can completely replicate the complex of properties of NR-based vulcanizates; however, a number of SRs allow to obtain vulcanizates with some properties superior to those of NR vulcanizates.

In order to obtain vulcanizates having a complex of properties very similar to those ensured by using NR, some different rubbers are used to formulate rubber mixtures. As a result, that more or less, provides the properties identical to those obtained when NR is used. This technique is described in many patents, for example, US5395891A, US5886086, US2016145418, US6359045, US2004261927, US4946887, US8383711, US2014100334A1, US2017327601, RU2235105, RU2502754, RU2635803, and EP0601611A1.

However, mechanical mixing does not ensure the achievement of mutual penetration of rubber particles at a sufficient level and, as a consequence, desired properties. A high level of mutual penetration of rubber particles is possible only by mixing polymerizates.

A method of mixing polymerizates to produce a product having optimal desired properties is known from literature and patent documents.

Thus, author's certificate SU1001671 discloses a method for preparing polybutadiene having a high content of 1,2-units and controlled molecular-weight distribution. The method is performed by polymerization of 1,3-butadiene in toluene in the presence of an organolithium compound as a catalyst and diethylene glycol dimethyl ether (diglyme) as an electron donor in two parallel reactor batteries with a common feed line of a solution of toluene monomers as a starting material, wherein one of the batteries is used to produce a polymerizate containing a high-molecular weight polymer having an intrinsic viscosity of 1.9 to 2.5 dl/g, and the other battery is used to produce a polymerizate comprising a low-molecular weight polymer having an intrinsic viscosity of 0.3 to 0.6 dl/g, followed by mixing these polymerizates at a weight ratio of 9:1 to 4:1, wherein a portion of the polymerizate containing the low-molecular weight polymer is fed to the starting material at a weight ratio to the remaining portion of 1:30 to 30: 1.

In said invention, the electron donor additive is diethylene glycol dimethyl ether (diglyme) that is subjected to metalation with organolithium compounds, i.e. an ether cleavage process proceeds with the formation of lithium alkoxides. With that, the break of growing polymer chains occurs, leading to the formation of a non-functionalized polymer.

Patent RU2487137 provides a method for preparing (co)polymers, the process is carried out in two parallel reactors, each of which is used for polymerization of dienes or their copolymerization with each other and/or vinylaryl compounds. A first reactor is fed with an organolithium initiator, an electron donor additive, and a branching agent; the other reactor is fed with an organolithium initiator, an electron donor additive, and a functionalizing agent. The polymerization mixtures prepared in the first and second reactors are mixed with each other, followed by a chain-termination reaction. Preferable dienes are conjugated dienes, such as butadiene and/or isoprene.

The resulting polymer is characterized by a high content of a low-molecular weight fraction, which is caused by the transfer of the active metal of a polymer chain to the solvent of a catalyst system - toluene. In addition, the use of alkali metal alkoxides as components of the catalyst system, in combination with halides of elements of Group 4 of the Periodic table, which are used as branching agents, does not provide efficient branching of the polymer. Therefore, a high level of the complex of elastic-hysteresis and physicomechanical properties in rubber mixtures is not possible.

Patent RU2565706 discloses a functionalized diene elastomer and a composition thereof. The functionalized diene elastomer consists of from 75 to 95 wt.% of a monofunctionalized elastomer that at one end of the chain contains a silanol functional group or a silanol-terminated polysiloxane block and has no a functionalized group at the other end, and of from 5 to 25 wt.% of an elastomer that binds to or is star-branched by tin.

The branching and functionalization of a polymer in one stream does not allow to achieve a high level of branching and functionalization, and, therefore, polymers prepared by this method are inferior to polymers prepared by mixing a branched portion and a functionalized portion, in such parameters as processability and elastic-hysteresis properties.

Patent US6228908 describes diene polymers and copolymers in an elastomer composition. The diene polymers and copolymers are prepared first by coupling a portion of "living" polymer chains prepared by anion polymerization, using a coupling agent, which is a tin polyhalide, and then by terminating (chain-end modification of) the remaining "living" chains by hydrocarbyl silane compounds.

The addition of coupling agents, which act as terminating agents, makes it difficult to control the concentration of the remaining "living" chains because of a percentage of theoretically active lithium is spent on impurities, so that later, during modification, this can lead to incomplete functionalization of the polymer.

Document EP2452951 discloses end groups functionalized polymer exhibiting a silane containing carbinol group of formula $(-(Si(R^1)(R^2)-C(R^3)(R^4)-A-OH))$ (I) at its chain end. Independent claims are also included for: (1) preparing the end groups functionalized polymer; (2) a vulcanizable rubber composition comprising antioxidants, oils, fillers, rubber and/or rubber auxiliaries, and the end groups functionalized polymer containing end groups (I), or end groups present as metal salts; (3) tires obtainable from the vulcanizable rubber composition; and (4) moldings obtainable from the vulcanizable rubber composition.

Document RU2626967 describes a method that involves the polymerization of butadiene in a hydrocarbon solvent medium in the presence of a catalytic complex. Polymerized butadiene interacts with a modifier, a tin-containing compound. The modifier is fed to the polymerisate upon achievement of the monomer conversion of 87 to 95% and subjected to preliminary intensive mixing with the polymerization stream in a static flow mixer providing a degree of homogenization of, at least, 90%. After that, the resulting solution is further stirred in a subsequent reactor for 0.5-2 hours at a temperature of 62-80°C. At the end, the polymer is isolated and dried. The obtained polybutadiene is characterized by a narrow polydispersity, high viscosity according to Mooney and the content of 1,4-cis units with improved physical-mechanical performance of rubber.

A method for preparing functionalized polymer compositions disclosed in patent RU2439101 is the closest in technical essence and achieved result. A rubber composition is prepared by admixing a low-molecular weight conjugated diene polymer (B) characterized by the presence of a functional group, a content of aromatic vinyl compound of from 0 to less than 5 wt.%, and an average molecular weight of $2000 \leq Mw < 15000$ and a diluent (C) with a high molecular weight rubber component (A) characterized by an average molecular weight of not less than 150000. The functional group of polymer (B) is selected from a tin-containing group, a silicon-containing group and a nitrogen-containing group. The nitrogen-containing group is derived from a group consisting of isocyanate, thioisocyanate, aminobenzophenone compounds, urea derivatives, ketamine or aldimine compounds containing a C=N-C bond, and cyclic amide compounds. The method comprises the use of a low molecular weight component in the rubber mixture, which improves elastic-hysteresis properties provided by an increased heat generation due to the dissipation of energy at free ends of the polymer chain. Functionalization of only the low-molecular weight component in the rubber mixture does not ensure an improvement in the elastic-hysteresis properties of vulcanizates. In addition, a vulcanizate made using this rubber composition is characterized by improved icy road gripping characteristics, and increased wearability.

Thus, there is still a need to create synthetic rubber having characteristics very close to natural rubber (NR) that has good strength properties, wear resistance, and resistance to multiple bending, in combination with a high elasticity and frost resistance.

## Summary of the invention

The technical objective of the present invention is to provide a polymer having a low content of vinyl groups, wherein the polymer could replace natural rubber in the formulation of rubber compounds.

The objective is addressed by preparing a polymer composition by mixing a butadiene-styrene polymerizate prepared using an electron-donor additive containing at least two heteroatoms, an aliphatic potassium alkoxide, an organolithium initiator and using a chain-end modifier selected from the group of compounds containing at least one oxygen atom and one silicon atom or a chain-end modifier containing at least one nitrogen atom, and a polybutadiene polymerizate prepared using a catalyst complex of an organoaluminum compound with a neodymium compound, and at least one branching agent containing at least one tin atom.

A polymer composition used in the manufacture of tires, in particular truck tires, is prepared by mixing a butadiene-styrene polymerizate and a polybutadiene polymerizate at a ratio of 1:1, wherein the butadiene-styrene polymerizate is characterized by a 1,2-unit content of 18 to 24%, and a bound styrene content of 30 to 40% and the polybutadiene polymerizate is characterized by a cis-1,4 unit content of 97 to 99%, a 1,2-unit content of 0.2 to 0.8%, and a trans-1,4 unit content of 1 to 1.5%.

In another aspect, the invention relates to a rubber mixture prepared using the polymer composition according to the invention.

The technical result is to prepare a polymer composition, which is a copolymer having a low content of vinyl groups, the copolymer being an alternative to the natural rubber (NR) used at present in the manufacture of truck tires. In addition, the wear resistance of the claimed composition is twice higher than that in NR.

**Description of the invention**

Good strength properties of filled and non-filled polymer vulcanizates, wear resistance, and resistance to multiple bending, a high elasticity and a good frost resistance are important characteristics that are mandatory for polymers. It is the properties that natural rubber possesses. However, the production of NR has a number of disadvantages compared to synthetic rubbers. Despite the fact that the productivity of rubber plantations around the world has greatly increased in recent years, an increase in the production of NR is not unlimited: the tire industry has already faced with the deficiency of NR, which is also reflected in its ever-increasing price. In addition, the composition and properties of natural rubber significantly depend on the habitat of rubber plants and year climatic characteristics. This fact makes it difficult to ensure stable quality of produced tires. In addition, NR does not contain functional groups (FG), and approaches of its functionalization are significantly limited, while functionalized products become more attractive for the rubber consumers because of an improved complex of their elastic-hysteresis and physicomechanical properties in vulcanizates compared to non-functionalized products. In summation of these reasons, at the moment there is an acute problem of replacing NR with synthetic analogs.

The present invention provides a polymer composition having a low content of vinyl groups, used in rubber mixtures for the production of tires, the composition comprising a butadiene-styrene polymerizate and a polybutadiene polymerizate at a ratio of 1:1, wherein the butadiene-styrene polymerizate is characterized by a 1,2-unit content of 18 to 24%, and a bound styrene content of 30 to 40%, and the polybutadiene polymerizate is characterized by a cis-1,4 unit content of 97 to 99%, a 1,2-unit content of 0.2 to 0.8%, and a trans-1,4 unit content of 1 to 1.5%, and wherein the composition is characterized by a Mooney viscosity of 60 to 80 c.u., a bound styrene content of 17 to 19%, and a 1,2-unit content of 8 to 12%.

The butadiene-styrene polymerizate is prepared by polymerization of appropriate starting diene monomers and vinylaromatic monomer, wherein diene is selected from 1,3-butadiene and isoprene (2-methyl-1,3-butadiene), and the vinylaromatic monomer is selected from styrene and $\alpha$-methyl styrene, in the presence of a catalyst system comprising:

- an organolithium initiator;
- an electron-donor compound (ED) comprising at least two heteroatoms; and
- an aliphatic potassium alkoxide of general formula ROK, wherein R is an aliphatic group that can be selected from straight- or branched-chain primary, secondary, or tertiary aliphatic groups.

The ED:ROK molar ratio is in a range of 1:(0.1-3), respectively. The ED and ROK are fed simultaneously or alternatively in any order before feeding the organolithium initiator. The optimal ratio selected from the above range depends on the target parameters of the polymer microstructure to be achieved. The ED:ROK ratio of 1:(0.17-0.3) is most preferable.

The claimed method for preparing a butadiene-styrene polymerizate suggests the use of various aliphatic potassium alkoxides of the general formula ROK, wherein R is an aliphatic group containing from 5 to 15 carbon atoms, the group being selected from straight- or branched-chain primary, secondary or tertiary aliphatic groups and/or a mixture thereof. Preferable potassium alkoxides are potassium amylate, potassium isoamylate, potassium tert-amylate, potassium hexanolate, potassium 2-methylhexanolate, potassium 2-ethylhexanolate, potassium heptanolate, potassium 2-methylheptanolate, potassium 2-ethylheptanolate, potassium octanolate, and potassium lapromolat, including polyfunctional mixed potassium lapromolat-tetrahydrofurfurylates containing sodium and elements of Group 2 of the Periodic table.

The amount of potassium alkoxide used to prepare the butadiene-styrene polymerizate is calculated based on the active lithium (a counter-ion to the anion in an organometal compound), and, therefore, the dosage of potassium alkoxide varies depending on the microstructure preferred for a copolymer prepared. The higher the amount of fed alkoxide, the lower the content of vinyl aromatic compound residues in the copolymer molecule, wherein the residues are represented by different-length blocks, and the smaller the length of said blocks.

According to the present invention, the amount of used potassium alkoxide based on active lithium is from 0.01 to 0.5 mol per 1 mol of active lithium, preferably from 0.02 to 0.4 mol per 1 mol of active lithium, and most preferably from 0.03 to 0.3 mol per 1 mol of active lithium.

The electron-donor additive used to prepare the butadiene-styrene polymerizate comprises two and more heteroatoms in one molecule.

The ED with two or more heteroatoms can be ethylene glycol dimethyl ether (monoglyme), diethylene glycol dimethyl ether (diglyme), 2,2-bis(2'-tetrahydrofuryl)propane (DTHFP), N,N,N',N'-tetramethylethylenediamine (TMEDA), methyl tetrahydrofurfuryl ether, ethyl tetrahydrofurfuryl ether, propyl tetrahydrofurfuryl ether, butyl tetrahydrofurfuryl ether, isopropyl tetrahydrofurfuryl ether, sec-butyl tetrahydrofurfuryl ether, isobutyl tetrahydrofurfuryl ether, tert-butyl tetrahydrofurfuryl ether, pentyl tetrahydrofurfuryl ether hexyl tetrahydrofurfuryl ether, ethylene glycol tert-butyl methyl ether, ethylene glycol tert-butyl ethyl ether (EGTBEE), ditetrahydrofurfuryl ether, diethylene glycol diethyl ether, diethylene glycol dipropyl ether, diethylene glycol diisopropyl ether, diethylene glycol dibutyl ether, diethylene glycol diisobutyl ether, or mixtures thereof.

Preferable EDs with two or more heteroatoms are ditetrahydrofurylpropane (DTHFP), N,N,N',N'-tetramethylethylenediamine (TMEDA), methyl tetrahydrofurfuryl ether, ethylene glycol dimethyl ether, ethylene glycol tert-butyl ethyl ether, and ditetrahydrofurfuryl ether.

Most preferable EDs with two or more heteroatoms are DTHFP and TMEDA.

The amount of a used ED is calculated based on active lithium, and, accordingly, the ED dosage varies depending on the microstructure to be preferred for copolymer prepared. The greater the amount of a used ED, the higher content of 1,2-units in the copolymer is.

The ED with two or more heteroatoms is used in an amount of from 0.01 to 0.3 mol per 1 mol of active lithium, preferably from 0.02 to 0.2 mol per 1 mol of active lithium, most preferably from 0.03 to 0.1 mol per 1 mol of active lithium.

The organolithium compounds used to prepare the butadiene-styrene polymerizate are alkyl lithium or derivatives thereof selected from the group including ethyl lithium, isopropyl lithium, n-butyl lithium, sec-butyl lithium, tert-butyl lithium, phenyl lithium, methyl lithium, 2-naphthyl lithium, 4-phenylbutyl lithium, propyl lithium, isopropyl lithium, 3-dimethylaminopropyl lithium, and 3-diethylaminopropyl lithium.

n-Butyl lithium, sec-butyl lithium, tert-butyl lithium, and 3-dimethylaminopropyl lithium are preferable.

The most preferable organolithium initiator is n-butyl lithium.

The amount of the used organolithium initiator depends on a desired Mooney viscosity of the prepared butadiene-styrene polymerizate. On the scale of industrial production, the optimum amount of the organolithium initiator is from 4 to 11 mol per ton of monomers.

The butadiene-styrene polymerizate is prepared at a various ratio of stating diene monomers (1,3-butadiene or isoprene) to styrene or $\alpha$-methyl styrene, which is in a range of (95-60):(5-40) weight parts, respectively. The preferable ratio is (80-50):(20-50) weight parts, respectively. The most preferable ratio is (70-60):(30-40) weight parts, respectively.

The butadiene-styrene polymerizate is prepared using a hydrocarbon solvent, which is an aliphatic solvent selected from the group including pentane, hexane, and heptane; a cycloaliphatic solvent selected from cyclohexane and cycloheptane; and gasoline fractions, and an aromatic solvent selected from benzene, toluene, ethylbenzene, and xylene; or a mixture thereof.

Hexane or a mixture of hexane and gasoline fractions is preferred as the hydrocarbon solvent.

The most preferable hydrocarbon solvent is a mixture of cyclohexane and nefras at a ratio of (65-70):(30-35), wherein the nefras is a hexane-heptane fraction of paraffinic hydrocarbons of dearomatized gasoline from catalytic reforming with a boiling point limit of 65-75°C.

The butadiene-styrene polymerizate is prepared by anionic polymerization at a temperature of 70-130°C.

The preferable temperature of the process is in a range of 80 to 120°C.

The most preferable temperature is in a range of 90 to 110°C.

The polymerization process in the indicated temperature range in the presence of an electron donor system according to the invention ensures the butadiene-styrene polymerizate characterized by a random structure and a low content of vinyl units. The content of 1,2-units of 40% and more is considered to be a high content of vinyl groups. The prepared butadiene-styrene polymerizate is characterized by a 1,2-unit content of 18 to 24% and a bound styrene content of 30 to 40%.

In addition, it should be noted that the process for preparing the butadiene-styrene polymerizate according to the present invention reduces the energy consumption associated with the recovery of a recycled solvent (most part of the solvent is easily separated from the polymerizate due to a high temperature of the polymerization process).

An excellent affinity of the resulting styrene-butadiene polymerizate to silica and carbon fillers is provided by its modification with a chain-end modifier selected from the group of compounds containing one oxygen atom and one silicon atom, or a chain-end modifier containing at least one nitrogen atom.

The chain-end modifiers selected from the group of compounds containing at least one oxygen atom and one silicon atom are compounds selected from the group of cyclosiloxanes and oxacyclosiloxanes.

Preferable chain-end modifiers containing at least one oxygen atom and one silicon atom are hexamethylcyclotrisiloxane (HMCTS), octamethylcyclotetrasiloxane (OMCTS), decamethylpentanecyclosiloxane (DMPCS), propylmethacrylate heptabutylcyclosiloxane, 1,3-glycidyl propiohepta-isobutylcyclosiloxane, 1,1-dimethyl-1-sila-2-oxacyclosiloxane, 2,2,4-trimethyl-1-oxa-4-aza-2-silacyclohexane.

Octamethylcyclotetrasiloxane and 1,1-dimethyl-1-sila-2-oxacyclosiloxane are most preferable.

The amount of a fed modifier based on active lithium is from 0.05 to 5 mol per 1 mol of active lithium, preferably from 0.1 to 1 mol per 1 mol of active lithium.

The chain-end modifiers selected from the group of compounds containing at least one nitrogen atom are compounds selected from the group of vinylpyridines, lactams and nitriles.

Preferable chain-end modifiers containing at least one nitrogen atom are N-methyl-epsilon-caprolactam, N-methyl-pyrrolidone, 2-vinylpyridine, 4-vinylpyridine, 3-dimethylaminopropionitrile, and 3-diethylaminopropionitrile.

2-Vinylpyridine and 3-dimethylaminopropionitrile are preferable.

The amount of a fed modifier based on active lithium is from 0.1 to 6 mol per 1 mol of active lithium, preferably from 0.9 to 5 mol per 1 mol of active lithium.

The use of chain-end modifiers below the indicated range is inefficient because it does not allow to achieve desired level of elastic-hysteresis properties. The use of chain-end modifiers above the indicated range is impractical because of an increased consumption of the modifier without positive changes in the elastic-hysteresis properties.

The selected chain-end modifiers used for the preparation of the butadiene-styrene polymerizate make it possible to achieve a low rolling resistance and a high adhesion to wet road surfaces in rubber mixtures.

The butadiene-styrene polymerizate is prepared by a continuous or batch-wise method in one or more reactors.

A continuous method for preparing the polymerizate by copolymerization of starting diene monomers (1,3-butadiene or isoprene) and styrene or α-methyl styrene is performed in a battery consisting of two or more metal reactors. The method of continuous copolymerization is preferably carried out in battery of 3 to 6 metal reactors. The batch-wise method is carried out in one or more non-connected metal reactors. All reactors are equipped with mixers, jacket to supply/remove heat, and fittings for loading raw materials and for unloading reaction products. The polymerization process can also be performed in one reactor.

At the beginning of the process, a reactor is charged with the total calculated amount of a vinyl aromatic monomer and the total volume of a hydrocarbon solvent, and then the mixture is heated to a desired temperature. After feeding and heating the mixture, the reactor is fed with the components of a catalyst system, wherein potassium alkoxide and ED are loaded first, simultaneously or separately in any order. Then, an organolithium initiator is fed, and the polymerization process is carried out until reaching a monomer conversion of 95% or more. At the beginning of the process, the temperature of the reaction mixture is 50 to 60°C. As the copolymerization reaction proceeds, the temperature of the reaction mixture increases to 70-130°C due to self-heating of the medium, and if the temperature exceeds or does not reach this range, the temperature is maintained at this level by the reactor thermal control system.

Upon reaching at least 95% conversion of the monomers, a chain-end modifier is fed to the polymerizate. The modification process is carried out for 10-20 minutes with continuous stirring. Then, after this time, the polymerizate is stabilized with an antioxidant, preferably a phenolic or amine antioxidant, in an amount of from 0.2-0.7 wt.%, most preferably from 0.3 to 0.6 wt.%. Preferable antioxidants are non-staining phenolic antioxidants, for example Irganox-1520.

The polybutadiene polymerizate is prepared by polymerization of 1,3-butadiene or isoprene (2-methyl-1,3-butadiene) in the presence of a catalyst complex of an organoaluminum compound and neodymium compound, followed by branching by means of at least one branching agent containing at least one tin atom.

The catalyst complex used for the preparation of the polybutadiene polymerizate includes (A) a neodymium compound, (B) an organoaluminum compound, (C) a conjugated diene, and (D) a halogen-containing component, at an (A):(B):(C):(D) molar ratio of 1:(8-30):(5-30):(1.5-3.0).

The preferable molar ratio between the catalyst complex components (A), (B), (C), and(D) is 1:(8-20):(5-20):(1.8-2.8).

The most preferable molar ratio between the catalyst complex components (A), (B), (C), and (D) is 1:(10-15):(10-15):(2.1-2.5).

Suitable neodymium compounds are selected from carboxylates, organophosphates, organophosphonates, and organophosphinates.

Neodymium carboxylates are selected from the group including neodymium formate, neodymium acetate, neodymium acrylate, neodymium methacrylate, neodymium valerate, neodymium gluconate, neodymium citrate, neodymium fumarate, neodymium lactate, neodymium maleate, neodymium oxalate, neodymium 2-ethylhexanoate, neodymium neodecanoate (trade name neodymium versatate), neodymium naphthenate, neodymium stearate, neodymium oleate, neodymium benzoate, and neodymium picolinate.

Neodymium organophosphates are selected from the group including neodymium dibutyl phosphate, neodymium diphenyl phosphate, neodymium dihexyl phosphate, neodymium diheptyl phosphate, neodymium dioctyl phosphate, neodymium bis(1-methylheptyl)phosphate, neodymium bis(2-ethylhexyl)phosphate, neodymium didecyl phosphate, neodymium didocel phosphate, neodymium dioctadecyl phosphate, neodymium bis(n-nenylphenyl)phosphate, neodymium butyl(2-ethylhexyl)phosphate, neodymium (1-methylphenyl)(2-ethylhexyl)phosphate, and neodymium(2-ethylhexyl)(n-nonylphenyl)phosphate.

Neodymium organophosphonates are selected from the group including neodymium butylphosphonate, neodymium pentylphosphonate, neodymium hexylphosphonate, heptylphosphonate neodymium, neodymium octylphosphonate, neodymium (1-methylheptyl)phosphonate, neodymium (2-ethylhexyl)phosphonate, neodymium decylphosphonate, neodymium dodecylphosphonate, neodymium octadecylphosphonate, neodymium oleylphosphonate, neodymium phenylphosphonate, neodymium (n-nonylphenyl)phosphonate, neodymium butyl(butylphosphonate), neodymium pentyl(pentylphosphate), neodymium hexyl(hexylphosphonate), neodymium heptyl(heptylphosphonate), neodymium octyl(octylphosphonate), neodymium (1-methylheptyl)((1-methylheptyl)phosphonate), neodymium (2-ethylhexyl)((2-ethylhexyl)phosphonate), neodymium decyl(dedecylphosphonate), neodymium dodecyl(dodecylphosphonate), neodymium octadecyl(octadecylphosphonate), neodymium oleyl(oleylphosphonate), neodymium phenyl(phenylphosphonate), neodymium (n-nonylphenyl)((n-nonylphenyl)phosphonate), neodymium butyl((2-ethylhexyl)phosphonate), neodymium (2-ethylhexyl)(butylphosphonate), neodymium (1-methylheptyl)((2-ethylhexyl)phosphonate), neodymium (2-ethylhexyl)((1-methylheptyl)phosphonate), neodymium (2-ethylhexyl)((n-nonylphenyl)phosphonate), and neodymium (p-nonylphenyl)((2-ethylhexyl)phosphonate).

Neodymium organophosphinates are selected from the group including neodymium butylphosphinate, neodymium pentylphosphinate, neodymium hexylphosphinate, neodymium heptylphosphinate, neodymium octylphosphinate, neodymium (1-methylheptyl)phosphinate, (2-ethylhexyl)phosphinate, neodymium decylphosphinate, neodymium dodecylphosphinate, neodymium octadecylphosphinate, neodymium oleylphosphinate, neodymium phenylphosphinate, neodymium (n-nonylphenyl)phosphinate, neodymium dibutylphosphinate, neodymium dipentylphosphinate, neodymium dihexylphosphinate, neodymium diheptylphosphinate, neodymium dioctylphosphinate, neodymium bis(1-methylheptyl)phosphinate, neodymium bis(2-ethylhexyl)phosphinate, tris[bis(2-ethylhexyl)phosphinate]neodymium, neodymium didecylphosphinate, neodymium didodecylphosphinate, neodymium dioctadecylphosphinate, neodymium dioleylphosphinate, neodymium diphenylphosphinate, neodymium bis(n-nonylphenyl)phosphinate, neodymium butyl(2-ethylhexyl)phosphinate, neodymium (1-methylheptyl)(2-ethylhexyl)phosphinate, and neodymium (2-ethylhexyl)(n-nonylphenyl)phosphinate.

Neodymium carboxylates and phosphates are preferable; neodymium neodecanoate and neodymium tris[bis(2-ethyhexyl)phosphate] or mixtures thereof are most preferable.

The organoaluminum compounds used in the method for preparing the polybutadiene polymerizate are trialkyl aluminum, triphenyl aluminum, or dialkyl aluminum hydrides, alkyl aluminum dihydrides, in particular, trimethyl aluminum, triethyl aluminum, tri-n-propyl aluminum, tri-isopropyl aluminum, tri-n-butyl aluminum, tri-isobutyl aluminum, tri-tert-butyl aluminum, triphenyl aluminum, trihexyl aluminum, tricyclohexyl aluminum, trioctyl aluminum, diethyl aluminum hydride, di-n-propyl aluminum hydride, di-n-butyl aluminum hydride, di-iso-butyl aluminum hydride, dihexyl aluminum hydride, di-isohexyl aluminum hydride, dioctyl aluminum hydride, di-iso-octyl aluminum hydride, phenylethyl alyuminy hydride, phenyl-n-propyl aluminum hydride, phenyl-iso-propyl aluminum hydride, phenyl-n-butyl aluminum hydride, phenyl-iso-butyl aluminum hydride, benzyl ethyl aluminum hydride, benzyl n-butyl aluminum hydride, benzyl iso-butyl aluminum hydride, benzyl iso-propyl aluminum hydride and the like.

Alkyl aluminum or alkyl aluminum hydrides, or mixtures thereof are preferable.

Triethyl aluminum, tri-iso-butyl aluminum, di-iso-butyl aluminum hydride, or a mixture thereof is most preferable.

Conjugated dienes used in the catalyst complex are 1,3-butadiene, isoprene, 2,3-dimethyl-1,3-butadiene, piperylene, 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-butyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene, and 2-methyl-3-isopropyl-1,3-butadiene.

Preferable conjugated dienes are 1,3-butadiene and isoprene.

Compounds used in the catalyst system as a halogen-containing compound are dimethyl aluminum chloride, diethyl aluminum chloride, di-iso-butyl aluminum chloride, dimethyl aluminum bromide, diethyl aluminum bromide, di-iso-butyl aluminum bromide, dimetyl aluminum fluoride, diethyl aluminum fluoride, di-iso-butyl aluminum fluoride, dimethyl aluminum iodide, diethyl aluminum iodide, di-iso-butyl aluminum iodide, methyl aluminum dichloride, ethyl aluminum dichloride, methyl aluminum dibromide, ethyl aluminum dibromide, methyl aluminum difluoride, ethyl aluminum difluoride, methyl aluminum sesquichloride, ethyl aluminum sesquichloride, and isobutyl aluminum sesquichloride, or mixtures thereof.

Preferable halogen-containing compounds are ethyl aluminum sesquichloride, ethyl aluminum dichloride, diethyl aluminum chloride or mixtures thereof.

Compounds used as a branching agent in the preparation of the polybutadiene polymerizate are tin halides of formulas $SnHal_2R_2$, $SnHal_3R$, $SnHal_4$, wherein R = $C_1$-$C_{20}$ alkyl, and Hal = F, Cl, Br, I. Tin halides of the formula $SnHal_4$, in particular tin tetrachloride and tetrabromide, are preferable. The most preferable branching agent is tin tetrachloride.

Branching is carried out at a temperature of 60 to 80°C for 10 to 40 min, preferably at a temperature of 70°C for 30 min. The branching agent is fed at a molar ratio to neodymium of 0.2 to 1. This molar ratio is optimal, and the feeding of the branching agent at a molar ratio to neodymium below 0.2 or above 1 does not provide effective branching.

The polybutadiene polymerizate is prepared in an inert hydrocarbon solvent by a continuous or batch-wise method by feeding butadiene and a catalyst complex previously mixed with a solvent, to a device, wherein the catalyst complex comprises neodymium compounds, an organoaluminum compound, a conjugated diene and a halogen-containing organic compound. The concentration of the conjugated diene in the form of monomers in a solvent is, as a rule, between 7 and 12 wt.%, preferably between 9 and 10%. The concentration below 7% leads to a decrease in the energy efficiency of the process, and the concentration above 10% leads to an increase in the viscosity of the polymerizate, an increase in the energy consumption at the steps of isolation and drying of the rubber.

The catalyst complex (CC) is prepared by adding to a solution a conjugated diene (preferably butadiene) in an aliphatic solvent, an organoaluminum compound (preferably tri-iso-butyl aluminum, di-iso-butyl aluminum hydride (DIBAH) or mixtures thereof), a neodymium compound (preferably carboxylate, in particular, neodymium versatate or phosphate), aging the prepared mixture for from 15 min to 20 hours at a temperature of $23 \pm 2°C$, followed by adding DIBAH and a halogen-containing compound (preferably ethyl aluminum sesquichloride, ethyl aluminum dichloride, diethyl aluminum chloride or mixtures thereof) at a molar ratio neodymium compound: conjugated diene:organoaluminum compound: halogen-containing compound of 1:(8-20):(5-20):(1.8-2.8), preferably 1:(10-15):(10-15):(2.1-2.5), and most preferably 1:10:10:(2.1-2.5).

Butadiene and the catalyst complex are fed to a first reactor of the polymerization battery, a DIBAH solution is additionally added to the mixture to control the molecular weight of the polymer at a DIBAH/Nd compound molar ratio of 1.2-3.2, preferably 2.5-2.8.

In the case of a continuous method, the polybutadiene polymerizate is pumped downstream from the first polymerization rector to the second, third, and then fourth polymerization rectors. The conversion of monomers reaches before modification 87 to 95%. After that, the polymerizate is fed to a static flow mixer, where the polymerizate is intensively mixed with a solution of a tin halide modifier, preferably tin tetrachloride ($SnCl_4$), at a tin halide/Nd compound ratio of 0.62-2.25, preferably 0.2-1.0. Further mixing and reaction between the modifier and polymerizate occurs in the last downstream polymerization reactor for from 30 min to 2 hours at a temperature of 62-80°C. Then, the polymerizate is delivered to the step of stopping using softened water, followed by stabilizing with a solution of an antioxidant selected from phenolic compounds, for example Irganox-1520 L, prepared using the same solvent that was used for the polymerization of butadiene, in an amount of 0.2-0.4% per 100% polymer.

The dosage of the catalyst complex (CC) is 1.20 to 1.50 mol/t, based on neodymium.

The amount of the used modifier is calculated in a mole ratio to neodymium and is from 0.62 to 2.25, preferably from 1.50 to 1.75.

The resulting polybutadiene polymerizate is characterized by a cis-1,4-unit content of 97 to 99%, a 1,2-unit content of 0.2 to 0.8%, and a trans-1.4 unit content of 1 to 1.5%.

The resulting butadiene-styrene and polybutadiene polymerizates are mixed to obtain a polymer composition with a low content of vinyl groups. The resulting polymerizates are mixed at a weight ratio of 1:1 in a separate device equipped with a stirrer for 20 to 40 min, preferably 30 min, at a temperature of 70 to 100°C. After mixing the polymerizates, the resulting mixture is delivered to the step of isolation by aqueous or anhydrous degassing. The resulting polymer composition is characterized by a Mooney viscosity of 60 to 80 c.u., a bound styrene content of 17 to 19%, and a 1,2-unit content of 8 to 12%.

The present invention also relates to rubber mixtures on the basis of the prepared polymer composition having a low content of vinyl groups.

The composition content of a rubber mixture is determined by the purpose, operating conditions and technical requirements to the product, production process, and other factors.

The method for preparing vulcanizate comprises mixing rubber with ingredients in special mixers or mills, shearing and cutting semi-finished products made of rubber (shapes and sizes depend on the further intended use of the resulting rubber, in particular, from the test method to be used) and vulcanization of the semi-finished products in special devices (presses, autoclaves, vulcanizer formers and others).

Rubber mixtures are prepared according to standard formulations that comprise, in addition to the polymer composition having a low content of vinyl groups, other optional additives well known to those skilled in the art, such as, for example, fillers, activators and vulcanization accelerators, curing agents, various softeners and other processing additives. The total content of additives is 40 to 100 parts per 100 parts of copolymer.

The filler can be, for example, carbon black, silica, oxides of titanium and zinc, and the like.

Compounds suitable as an activator and a vulcanization accelerator are, for example, oxides of lead, zinc, and magnesium, acetanilide, stearic acid, sulfenamides, diphenylguanidine, and the like.

Compounds that can be used as curing agent are, for example, sulfur, organic peroxides and polyhalogenated alkylphenol-formaldehyde resins, oligoether acrylates, and other unsaturated compounds.

Compounds that are useful as softeners and technological additives are, for example, naphthenic oils, stearic and oleic acids, paraffins, rosins and the like.

The rubber mixtures prepared from the above-mentioned polymer composition having a low content of vinyl groups are characterized by high strength properties, wear resistance, and adhesion to wet road surfaces, as well as a high resistance to multiple bending, in combination with a high elasticity and frost resistance.

The rubber mixtures according to the invention can be prepared, in particular, in the formulation according to GOST R 54555-2011 (Table 1). The resulting rubber mixtures fully comply with the technical requirements to the product, in particular the generally available standard ASTM D 3185-07.

**Table 1**

| Formulation of rubber compounds | | |
|---|---|---|
| Name | Weight part in the formulation, g | |
| | 1A | 2A |
| Rubber | 100.00 | 100.00 |
| Zinc oxide | 3.0 | 3.0 |
| Sulfur | 1.75 | 1.75 |
| Stearic acid | 1.00 | 1.00 |
| Oil furnace carbon black | 50.00 | 35.00 |
| TBBS (N-*tert*-butyl-2-benzothiazolesulfenamide) | 1.00 | 1.00 |
| The total: | 156.75 | 141.75 |
| Load factor for rolling mill | 3.0 | 3.3 |
| Load factor for an internal mixer<br>- cam-type<br>- banbury type | 0.47<br>0.49 | 0.49<br>0.46 |

When rubber mixtures are prepared in a miller, the weight accuracy is 1.0 g for rubber and carbon black, 0.02 g for sulfur and a vulcanization accelerator, and 0.1 g for other ingredients.

When mixtures are prepared in an internal mixer, the weight accuracy is 0.1 g for rubber and carbon black, 0.01 g for a mixture of ingredients, and 0.001 g for separately added ingredients, if any.

The resulting polymer mixture is an alternative to natural rubber. The composition is characterized by an excellent affinity to silica and carbon fillers. Vulcanizates from the polymer composition having a low content of vinyl groups, according to the present invention, are characterized by improved physicomechanical properties, such as an improved wear resistance (compared to natural rubber) and elastic-hysteresis properties, which are on the same level as in natural rubber.

## Embodiments of the invention

Embodiments of the present invention are disclosed below. A person skilled in the art will understand that the invention is not limited to the presented examples only, and the same effect can be achieved in other embodiments without exceeding the object of the claimed invention.

The test methods used to evaluate the properties of the copolymers prepared by the claimed method are as follows:

1) Mooney viscosity of rubbers at 100°C (ML(1+4)100°C) was determined according to ASTM D 1646-07 on a MV 2000 Mooney viscometer.

2) Molecular weight characteristics of rubbers were determined by gel permeation chromatography according to the internal procedure. The measurements were carried out using a gel chromatograph Waters Breeze with a refractometer. Test conditions: a bank of 4 high-resolution columns (300 mm long, 7.8 mm in diameter) filled with Styragel (HR3, HR4, HR5, HR6) which allows for analysis of polymers with a molecular weight of 500 to $1*10^7$ a.m.u.; solvent - tetrahydrofuran, flow rate - 1 cm$^3$/min; temperature in the thermostat for columns and in refractometer - 30°C; calculation - universal calibration with polystyrene standards using the Kuhn-Mark-Houwink constants (for butadiene-styrene copolymers K = 0.00041, $\alpha$ = 0.693). Samples of rubbers were dissolved in freshly distilled tetrahydrofuran, the weight concentration of the polymer in the solution was 2 mg/ml.

3) The determination of the weight ratio between bound styrene and 1,2-units in samples of butadiene-styrene copolymers was carried out by Fourier transform IR spectroscopy in accordance with the specifications TU 38.40387-2007 (cl.5.8). The method is based on measuring the intensity of the absorption band at 700 cm$^{-1}$ corresponding to CH vibrations in the benzene ring of styrene, and the intensity of the absorption band at 910 cm$^{-1}$ corresponding to the vibrations of 1,2-polybutadiene units. The IR spectrometer was calibrated using a set of standard samples of the composition and microstructure of random butadiene-styrene rubber with known weight ratios of bound styrene and 1,2-units in the butadiene part of the chain determined by NMR spectroscopy.

4) The determination of the content of a residual modifier in the polymer is based on the preliminary extraction of the modifier with ethyl alcohol, followed by chromatography-flame ionization detector analysis. The residual modifier was calculated by the internal standard method.

5) The degree of modification of polymer was calculated by the formula:

$$X,\% = (w_{i}, g - w_{r}, g)*100\%/w_{i}, g,$$

where X is the degree of modification
$w_i$ is the weight of the introduced modifier
$w_r$ is the weight of the residual modifier

5) The content of active lithium in solutions of lithium catalysts was determined by a method based on direct titration of active lithium with a solution of isopropyl alcohol in xylene in the presence of o-phenanthroline that generates a red-orange complex with organolithium compounds.

6) Performance properties of rubber compounds, such as rolling resistance (tan $\delta$ at 60°C), were evaluated on a rubber process analyzer (RPA-2000 - Alpha Technologies. frequency - 10 Hz, shift amplitude - 10%, temperature - 60°C).

The essence of the proposed technical solution is illustrated by the following examples of specific embodiments, which illustrate, without any limitation, the scope of the invention. A person skilled in the art will appreciate that the invention is not limited to them, and the same effect can be achieved by applying equivalent formulas.

<u>Example 1 according to the prototype</u>

Preparation of a high-molecular weight polymer (polymer A) A 800 ml pressure-operated tank dried and blown with nitrogen was filled with a solution of butadiene in cyclohexane (16%) and a solution of styrene in cyclohexane (21%) so as to reach a butadiene monomer content of 40 g and a styrene monomer content of 10 g, and then 0.12 mM 2,2-tetrahydrofuran and additionally 0.4 mM n-butyl lithium (n-BuLi) were added. After that, the polymerization reaction was carried out at 50°C for 1.5 hours. The conversion degree during the polymerization reached 100%. The polymerization reaction was quenched by addition of 0.5 ml of a solution of 2,6-di-tert-butyl-n-cresol ((unconventional name of butylated hydroxytoluene (BHT)) in isopropanol (the concentration of BHT was 5 wt.%) to the polymerization system, followed by drying by a traditional method to obtain a high-molecular weight polymer.

Preparation of a low-molecular weight polymer (polymer B) A 800 ml pressure-operated tank dried and blown with nitrogen was filled with 300 g of cyclohexane and 50 g of 1,3-butadiene, and then with ditetrahydrofurylpropane so as to reach a quantitative ratio of ditetrahydrofurylpropane to n-butyl lithium equal to 0.03. After adding 3.6 mM n-butyl lithium (n-BuLi) at 50°C for 5 hours, the reaction of polymerization was performed. The conversion degree during the polymerization reached about 100%. After that, various modifiers were immediately added to the polymerization system, and the reaction of modification was carried out at 50°C for additional 30 min. If the modifier was tin tetrahydrochloride, the molar ratio of tin tetrahydrochloride to n-BuLi was 0.22, and if the modifier was tetraethoxysilane, the molar ratio of tetraethoxysilane to n-BuLi was 0.9. The polymerization reaction was quenched by addition of 0.5 ml of a solution of 2,6-di-tert-butyl-n-cresol ((unconventional name of butylated hydroxytoluene (BHT)) in isopropanol (the concentration of BHT was 5 wt.%) to the polymerization system, followed by drying by a traditional method to obtain each modified low-molecular weight polybutadiene. Moreover, if the modification reaction was not carried out, a low-molecular weight polybutadien was prepared by a similar method, except of the corresponding reaction.

After preparing polymers A and B, they were used together in a rubber composition prepared according to the formulations set out in patent RU2439101.

<u>Example 2 According to the invention</u>

The process of copolymerization of butadiene with styrene (polymerizate A), as well polymerization of butadiene (polymerizate B), was carried out in a 10 liter metal reactor equipped with a stirrer, jacket to supply/remove heat, and fittings for loading reagents and for unloading a finished product.

The butadiene-styrene polymerizate (polymerizate A) was prepared by filling the reactor with previously prepared butadiene-styrene mixture consisting of 1,3-butadiene and styrene, and the total amount of a hydrocarbon solvent. The used solvent was a mixture of nefras and cyclohexane at a ratio of 70:30. The butadiene/styrene weight ratio in the mixture was 82:18, respectively. After feeding the mixture, the contents of the reactor were heated to 90°C, and the components of a catalyst system, in particular, an organolithium initiator and an electron donor system comprising potassium alkoxide and ED, were fed. The organolithium initiator was n-BuLi, and the calculated amount of n-BuLi was 9.2 mmol per kg of monomers. The potassium alkoxide was potassium t-amylate, and the molar ratio of potassium alkoxide to n-BuLi was 0.05. The ED was N,N,N',N'-tetramethylethylene diamine (TMEDA), and the molar ratio of ED to n-BuLi was 0.05. The chain-end modifier was octamethylcyclotetrasiloxane (OMCTS) in a molar ratio of OMCTS to n-BuLi of 0.9. The modification was carried out for 20 minutes. After modification, the reactor was filled with an antioxidant in an amount of 0.6%, based on polymerizate. The characteristics of the prepared polymerizate and rubber mixtures of the polymerizate are given in Table 3.

Plybutadiene polymerizate (polymerizate B) was prepared by a continuous method in an inert hydrocarbon solvent in a polymerization battery consisting of five reactors, by feeding 9.0% mixture (the mixture of a solvent and starting material) and a catalyst complex (CC) previously mixed with the solvent.

The catalyst complex was prepared by adding tri-iso-butyl aluminum and neodymium versatate to a butadiene solution in an aliphatic solvent, aging the prepared mixture for 20 hours at a temperature of $23\pm2°C$, followed by adding di-iso-butyl aluminum hydride (DIBAH) and ethyl aluminum sesquichloride (EASC) at a molar ratio neodymium versatate:butadiene:tri-iso-butyl aluminum:DIBAH:ethyl aluminum sesquichloride of 1:10:10:2:2.2.

The mixture and a solution of the catalyst complex were fed to the first reactor of the polymerization battery, and a DIBAH solution was additionally added to the mixture to control the molecular weight of polymer at a DIBAH/neodymium versatate molar ratio of 3.2.

The consumption of the catalytic complex was 1.2 mol/t at a battery load of 3 t/h.

Upon reaching a monomer conversion of over 95%, a solution of tin tetrachloride ($SnCl_4$) was added at a $SnCl_4$/Nd versatate ratio of 0.9. The branching was carried out at a temperature of 60°C for 30 min. After branching, the reactor was filled with an antioxidant in an amount of 0.6%, based on polymerizate. The characteristics of the prepared polymerizate and rubber mixtures of the polymerizate are given in Table 3.

After preparing polymerizates A and B, they were mixed at a ratio of 1:1 in a separate device at a steady-state temperature for 30 minutes, followed by aqueous degassing the mixture.

Example 3

The process of copolymerization was carried out similarly to Example 2 with the difference that 2-vinylpyridine (2-VP) was used as the chain-end modifier in the preparation of polymerizate A.

Example 4

The process of copolymerization was carried out similarly to Example 2, with the difference that 3-(dimethylamino)propionitrile (DMAPN) was used as the chain-end modifier in the preparation of polymerizate A.

Example 5

The process of copolymerization was carried out similarly to Example 2. sec-Butyl lithium was used as the initiator. The chain-end modification in the preparation of polymerizate A was not carried out. The resulting rubber mixture was inferior to the rubber mixtures according to the invention in elastic-hysteresis properties and wear resistance.

Example 6

The process of copolymerization was carried out similarly to Example 2. 2,2-Bis(2'-tetrahydrofuryl)propane (DTHFP) was used as the ED, and potassium tert-butyl was used as the potassium alkoxide. Octamethylcyclotetrasiloxane (OMCTS) was used as the chain-end modifier.

Example 7

The process of copolymerization was carried out similarly to Example 2. Isoprene was used as the conjugated diene in the preparation of polymerizate A and polymerizate B. Tin tetrabromide was used as the branching agent in the preparation of polymerizate B.

Example 8

The process of copolymerization was carried out similarly to Example 2. $\alpha$-Methylstyrene was used as the vinylaromatic compound in the preparation of polymerizate A.

Example 9

The process of copolymerization was carried out similarly to Example 2. $\alpha$-Methylstyrene was used as the vinylaromatic compound in the preparation of polymerizate A. 1,1-Dimethyl-1-sila-2-oxacyclohexane (DSO) was used as the chain-end modifier. Methyltrichlorostannane was used as the branching agent in the preparation of polymerizate B.

Example 10

The process of copolymerization was carried out similarly to Example 2. Potassium-sodium lapromolat was used as the potassium alkoxide. 2-Vinylpyridine (2-VP) was used as the chain-end modifier.

Example 11

The process of copolymerization was carried out similarly to Example 2. 2,2-Bis(2'-terahydrofurfuryl)propane (DTHFP) was used as the electron-donor (ED). 1,1-Dimethyl-1-sila-2-oxacyclohexane (DSO) was used as the chain-end modifier.

Example 12

The process of copolymerization was carried out similarly to Example 2. sec-Butyl lithium was used as the initiator. 2,2-Bis(2'-tetrahydrofuryl)propane (DTHFP) was used as the electron donor (ED), and potassium-sodium lapromolat was used as the potassium alkoxide. 1,1-Dimethyl-1-sila-2-oxacyclohexane (DSO) was used as the chain-end modifier.

Example 13

The process of copolymerization was carried out similarly to Example 2. 2,2-Bis(2'-tetrahydrofuryl)propane (DTHFP) was used as the electron donor (ED), and potassium tert-butylate was used as the potassium alkoxide.

Example 14

The process of copolymerization was carried out similarly to Example 2. Isoprene was used as the conjugated diene. 1,1-dimethyl-1-sila-2-oxacyclohexane (DSO) was used as the chain-end modifier.

Example 15

The process of copolymerization was carried out similarly to Example 2. $\alpha$-Methylstyrene was used as the vinylaromatic compound. 2,2-Bis(2'-tetrahydrofuryl)propane (DTHFP) was used as the electron donor (ED), and potassium-sodium lapromolat was used as the potassium alkoxide. 2-Vinylpyridine (2-VP) was used as the chain-end modifier.

Example 16

The process of copolymerization was carried out similarly to Example 2. $\alpha$-Methylstyrene was used as the vinylaromatic compound. Potassium tert-butylate was used as the potassium alkoxide. 2-Vinylpyridine (2-VP) was used as the chain-end modifier.

Example 17

The process of copolymerization was carried out similarly to Example 2. 2,2-Bis(2'-tetrahydrofuryl)propane (DTHFP) was used as the electron donor (ED), and potassium tert-butylate was used as the potassium alkoxide. 2-Vinylpyridine (2-VP) was used as the chain-end modifier.

Example 18

The process of copolymerization was carried out similarly to Example 2. $\alpha$-Methylstyrene was used as the vinylaromatic compound. 2,2-Bis(2'-tetrahydrofuryl)propane (DTHFP) was used as the electron donor (ED), and potassium tert-amylate was used as the potassium alkoxide. 1,1-Dimethyl-1-sila-2-oxacyclohexane (DSO) was used as the chain-end modifier.

Example 19

The process of copolymerization was carried out similarly to Example 2. sec-Butyl lithium was used as the initiator. $\alpha$-Methylstyrene was used as the vinylaromatic compound. 2,2-Bis(2'-tetrahydrofuryl)propane (DTHFP) was used as the electron donor (ED), and potassium-sodium lapromolat was used as the potassium alkoxide. 1,1-Dimethyl-1-sila-2-oxacyclohexane (DSO) was used as the chain-end modifier.

Example 20

The process of copolymerization was carried out similarly to Example 2. $\alpha$-Methylstyrene was used as the vinylaromatic compound. 2,2-Bis(2'-tetrahydrofuryl)propane (DTHFP) was used as the electron donor (ED), and potassium tert-butylate was used as the potassium alkoxide. Octamethylcyclotetrasiloxane (OMCTS) was used as the chain-end modifier.

Example 21

The process of copolymerization was carried out similarly to Example 2. $\alpha$-Methylstyrene was used as the vinylaromatic compound. Octamethylcyclotetrasiloxane (OMCTS) was used as the chain-end modifier.
The characteristics of the prepared polymer compositions and the modes of their preparation are given in Table 2.

Example of preparation of rubber mixtures

Rubber mixtures were prepared by vulcanizing polymer compositions. The polymer and the component composition of a rubber mixture were selected depending on the purpose, operating conditions and technical requirements to the product, production process and other factors.
The process of preparing vulcanizates comprises mixing rubber with ingredients in special mixers or mills, shearing and cutting semi-finished products made of rubber (shapes and sizes depend on the further intended use of the resulting rubber, in particular, from the test method to be used) and vulcanization of the semi-finished products in special devices (presses, autoclaves, vulcanizer formers and others).
In the context of the present invention, rubber mixtures were prepared according to the formulation as given in Table 1, wherein the polymer composition having a low content of vinyl groups according to the invention was used as rubber. The preparation of the rubber compounds was carried out in a small internal mixer with Banbury-type rotors. After each mixing step, the rubber mixtures were treated on rolling mills according to ASTM D 3182 at mill temperature of 50 $\pm$ 5°C.

Table 2

| Process parameters and the formulations of polymer compositions | | | | | | | |
|---|---|---|---|---|---|---|---|
| Formulations and modes for the preparation of polymerizates | Example No. | | | | | | |
| | 1 (prototype) | 2 | 3 | 4 | 5 | 6 | 7 |
| Temperature range, °C | 50-60 | 95-100 | 95-100 | 95-100 | 95-100 | 100-110 | 95-100 |
| | Butadiene-styrene polymerizate (polymerizate A) | | | | | | |
| Monomers | butadiene: styrene | butadiene: styrene | butadiene: styrene | butadiene: styrene | butadiene: styrene | butadiene: styrene | isoprene: styrene |
| The ratio of the conjugated diene: vinylaromatic compound in the mixture | 40:10 | 64:36 | 64:36 | 64:36 | 63:37 | 64:36 | 64:36 |
| Initiator | *n*-BuLi | *n*-BuLi | *n*-BuLi | *n*-BuLi | *sec*-BuLi | *n*-BuLi | *n*-BuLi |

(continued)

| | | Butadiene-styrene polymerizate (polymerizate A) | | | | | | |
|---|---|---|---|---|---|---|---|---|
| Dosage of initiator per kg of monomers, mmol | 3.6 | 8.3 | 8.5 | 8.9 | 8.2 | 8.0 | 8.4 |
| Electron-donor additive (ED) | DTHFP | TMEDA | TMEDA | TMEDA | TMEDA | DTHFP | TMEDA |
| ED dosage | 0.12 | 0.27 | 0.27 | 0.27 | 0.26 | 0.1 | 0.24 |
| Potassium alkoxide | - | potassium *tert*-amylate | potassium *tert*-amylate | potassium *tert*-amylate | potassium *tert*-amylate | potassium *tert*-butylate | potassium *tert*-amylate |

| | | | | | | | |
|---|---|---|---|---|---|---|---|
| Dosage of potassium alkoxide | - | 0.05 | 0.05 | 0.05 | 0.05 | 0.03 | 0.05 |
| Modifying agent (MA) | tetraethoxysilane | OMCTS | 2-VP | DMAPH | - | OMCTS | OMCTS |
| MA dosage | 0.9 | 0.1 | 5 | 0.9 | 0.9 | 0.1 | 0.1 |
| | | Polybutadiene polymerizate (polymerizate B) | | | | | |
| Temperature range, °C | 50-60 | 75-78 | 74-82 | 75-78 | 75-80 | 75-78 | 75-80 |
| Consumption of CC, mol/t | - | 1.3 | 1.3 | 1.3 | 1.3 | 1.3 | 1.3 |
| DIBAH/ Neodymium versatate | - | 2.8 | 2.8 | 2.6 | 2.8 | 2.8 | 2.6 |
| BA:neodymium versatate, mol/-mol | - | TTC/0.62 | TTC/0.62 | TTC/0,75 | TTC/0.62 | TTC/0.62 | TTB/0.75 |

Table 2. Continuation

| Formulations and modes for the preparation of polymerizates | Example No. | | | | | | |
|---|---|---|---|---|---|---|---|
| | 8 | 9 | 10 | 11 | 12 | 13 | 14 |
| Temperature range, °C | 95-100 | 95-100 | 95-100 | 100-110 | 100-110 | 100-110 | 95-100 |
| | Butadiene-styrene polymerizate (polymerizate A) | | | | | | |
| Monomers | butadiene: α-methylstyrene | butadiene: α-methylstyrene | butadiene: styrene | butadiene: styrene | butadiene: styrene | butadiene: styrene | isoprene: styrene |
| The ratio of the conjugated diene: vinylaromatic compound in the mixture | 64:36 | 64:36 | 64:36 | 64:36 | 63:37 | 63:37 | 64:36 |
| Initiator | *n*-BuLi | *n*-BuLi | *n*-BuLi | *n*-BuLi | *sec*-BuLi | *n*-BuLi | *n*-BuLi |
| Dosage of initiator per kg of monomers, mmol | 8,2 | 8,3 | 8,5 | 8,9 | 8,2 | 8.0 | 8.4 |
| Electron-donor additive (ED) | TMEDA | TMEDA | TMEDA | DTHFP | DTHFP | DTHFP | TMEDA |
| ED dosage | 0,27 | 0,27 | 0,27 | 0,1 | 0,1 | 0,1 | 0.24 |
| Potassium alkoxide | potassium *tert*-amylate | potassium *tert*-amylate | potassium-sodium lapromolat | potassium *tert*-amylate | potassium-sodium lapromolat | potassium *tert*-amylate | potassium *tert*-amylate |
| Dosage of potassium alkoxide | 0,05 | 0,05 | 0,05 | 0,05 | 0.03 | 0.03 | 0.05 |
| Modifying agent (MA) | OMCTS | DSO | 2-VP | DSO | DSO | OMCTS | DSO |
| MA dosage | 0.1 | 0.9 | 5 | 0,9 | 0.9 | 0.1 | 0.9 |
| | Polybutadiene polymerizate (polymerizate B) | | | | | | |
| Temperature range, °C | 74-82 | 75-80 | 75-80 | 75-78 | 75-80 | 75-78 | 75-80 |
| Consumption of CC, mol/t | 1.3 | 1.3 | 1.3 | 1.3 | 1.3 | 1.3 | 1.3 |
| DIBAH/ Neodymium versatate | 2.8 | 2.8 | 2.8 | 2.6 | 2.8 | 2.8 | 2.6 |
| BA:neodymium versatate, mol/mol | TTC/0.62 | MTC/0.62 | TTC/0.62 | TTC/0.75 | TTC/0.62 | TTC/0.62 | TTC/0.75 |

Table 2. Continuation

| Formulations and modes for the preparation of polymerizates | Example No. | | | | | | |
|---|---|---|---|---|---|---|---|
| | 15 | 16 | 17 | 18 | 19 | 20 | 21 |
| Temperature range, °C | 100-110 | 95-100 | 95-100 | 95-100 | 95-100 | 100-110 | 95-100 |
| | Butadiene-styrene polymerizate (polymerizate A) | | | | | | |
| Monomers | butadiene: α-methylstyrene | butadiene: α-methylstyrene | butadiene: styrene | butadiene: α-methylstyrene | butadiene: α-methylstyrene | butadiene: α-methylstyrene | butadiene: α-methylstyrene |
| The ratio of the conjugated diene: vinylaromatic compound in the mixture | 64:36 | 64:36 | 64:36 | 64:36 | 63:37 | 63:37 | 64:36 |
| Initiator | *n*-BuLi | *n*-BuLi | *n*-BuLi | *n*-BuLi | *sec*-BuLi | *n*-BuLi | *n*-BuLi |
| Dosage of initiator per kg of monomers, mmol | 8.7 | 8.3 | 8.5 | 8.9 | 8.2 | 8.0 | 8.4 |
| Electron-donor additive (ED) | DTHFP | TMEDA | DTHFP | DTHFP | DTHFP | DTHFP | TMEDA |
| ED dosage | 0.1 | 0.27 | 0.12 | 0.1 | 0.1 | 0.1 | 0.24 |
| Potassium alkoxide | potassium-sodium lapromolat | potassium *tert*-butylate | potassium *tert*-butylate | potassium *tert*-amylate | potassium-sodium lapromolat | potassium *tert*-butylate | potassium *tert*-amylate |
| Dosage of potassium alkoxide | 0.05 | 0.05 | 0.05 | 0.05 | 0.05 | 0.03 | 0.05 |
| Modifying agent (MA) | 2-VP | 2-VP | 2-VP | DSO | DSO | OMCTS | OMCTS |
| MA dosage | 5 | 5 | 5 | 0,9 | 0,9 | 0,1 | 0,1 |
| | Polybutadiene polymerizate (polymerizate B) | | | | | | |
| Temperature range, °C | 75-80 | 75-78 | 75-78 | 75-80 | 75-80 | 75-78 | 75-78 |
| Consumption of CC, mol/t | 1.3 | 1.3 | 1.3 | 1.3 | 1.3 | 1.3 | 1.3 |
| DIBAH/ Neodymium versatate | 2.8 | 2.8 | 2.8 | 2.6 | 2.8 | 2.8 | 2.6 |
| BA:neodymium versatate, mol/mol | TTC/0.62 | TTC/0.62 | TTC/0.62 | TTC/0.75 | TTC/0.62 | TTC/0.62 | TTC/0.75 |

List of abbreviations in Table 2:

CC - catalyst complex
TMEDA - N,N,N',N'-tetramethylethylenediamine
DTHFP - 2,2-bis(2'-tetrahydrofuryl)propane
n-BuLi - normal butyl lithium
sec-BuLi - sec-butyl lithium
OMCTS - octamethylcyclotetrasiloxane
DSO - 1,1-dimethyl-1-sila-2-oxacyclohexane
2-VP - 2-vinylpyridine
DMAPH - 3-(dimethylamino)propionitrile
DIBAH - di-iso-butyl aluminum hydride
NR - natural rubber
MA - modifying agent
BA - branching agent
TTC - tin tetrachloride
TTB - tin tetrabromide
MTC - methyltrichlorostannane

**Table 3**

| Properties of polymer compositions and vulcanizates based on them | | | | | | | | | | |
|---|---|---|---|---|---|---|---|---|---|---|
| Parameters and characteristics | Example No. | | | | | | | | | |
| | 1 | 2 | 3 | 4 | 5 | 6 | 7 | 8 | 9 | 10 |
| Polymer compositions | | | | | | | | | | |
| Content of 1,2-units, wt.% | 20 | 8 | 8 | 9 | 8 | 12 | 11 | 12 | 12 | 11 |
| Content of bound styrene, wt.% | 20 | 17 | 18 | 17 | 19 | 18 | 18 | 10 | 18 | 18 |
| MA conversion, wt.% | 99 | 99 | 98 | 99 | 97 | 99 | 96 | 99 | 97 | 99 |
| $M_n \cdot 10^{-3}$ a.m.u. | - | 140 | 135 | 130 | 138 | 143 | 147 | 149 | 142 | 146 |
| $M_w \cdot 10^{-3}$ a.m.uP | 180 | 258 | 255 | 248 | 256 | 269 | 268 | 271 | 265 | 259 |
| Polydispersity, $M_w/M_n$ | - | 1.84 | 1.89 | 1.91 | 1.86 | 1.89 | 1.83 | 1.82 | 1.87 | 1.78 |
| Mooney viscosity, Mooney Units | - | 70 | 68 | 68 | 68 | 72 | 70 | 73 | 70 | 72 |
| Vulcanizates | | | | | | | | | | |
| Rolling resistance, tg $\delta$ at +60° | | 0.144 | 0.15 | 0.153 | 0.157 | 0.149 | 0.15 | 0.146 | 0.149 | 0.159 |
| Wareability, mm | | 65 | 68 | 67 | 66 | 65 | 69 | 66 | 69 | 68 |

Table 3. Continuation

| Parameters and characteristics | Example No. | | | | | | | | | | | NR |
|---|---|---|---|---|---|---|---|---|---|---|---|---|
| | 11 | 12 | 13 | 14 | 15 | 16 | 17 | 18 | 19 | 20 | 21 | |
| Polymer compositions | | | | | | | | | | | | |
| Content of 1,2-units, wt.% | 12 | 10 | 12 | 11 | 12 | 10 | 12 | 9 | 10 | 10 | 11 | |
| Content of bound styrene, wt.% | 19 | 18 | 18 | 19 | 17 | 19 | 18 | 18 | 18 | 18 | 18 | |
| MA conversion, wt.% | 97 | 99 | 98 | 97 | 98 | 99 | 97 | 96 | 98 | 99 | 96 | |
| $M_n \cdot 10^{-3}$ a.m.u. | 149 | 145 | 143 | 140 | 142 | 142 | 147 | 145 | 139 | 145 | 146 | |
| $M_w \cdot 10^{-3}$ a.m.u. | 271 | 258 | 267 | 263 | 260 | 259 | 260 | 269 | 249 | 263 | 259 | |
| Polydispersity, $M_w/M_n$ | 1.82 | 1.78 | 1.87 | 1.88 | 1.83 | 1.83 | 1.77 | 1.86 | 1.8 | 1.82 | 1.78 | |
| Mooney viscosity, Mooney Units | 71 | 72 | 70 | 68 | 69 | 70 | 72 | 71 | 68 | 70 | 71 | |
| Vulcanizates | | | | | | | | | | | | |
| Rolling resistance, tg $\delta$ at +60° | 0.147 | 0.155 | 0.15 | 0.149 | 0.154 | 0.152 | 0.15 | 0.145 | 0.149 | 0.15 | 0.144 | 0.145 |
| Wareability, mm | 65 | 67 | 66 | 67 | 67 | 68 | 67 | 65 | 66 | 67 | 65 | **137** |

Comparing the data presented in Tables 2 and 3, it is obvious that the claimed method according to the invention provides a polymer composition having a desired level of properties, namely: Mooney viscosity of 60-80 c.u., the content of bound styrene of 17-19% and the content of 1,2-units of 8-12%.

The resulting polymer composition is characterized by improved physicomechanical properties, such as an improved wear resistance (compared with natural rubber), and by elastic hysteresis properties that are at the level of natural rubber. The composition is also characterized by an excellent affinity to silica acid and carbon fillers.

**Claims**

1. A polymer composition **characterized by** a low content of vinyl groups, used in rubber mixtures for the production of tires, the composition being a mixture of a butadiene-styrene polymerizate and a polybutadiene polymerizate at a weight ratio of 1:1, wherein the butadiene-styrene polymerizate is prepared using an electron donor additive (ED) comprising at least two heteroatoms, an aliphatic potassium alkoxide, an organolithium initiator and using a chain-end modifier selected from the group of compounds containing at least one oxygen atom and one silicon atom, and wherein the polybutadiene polymerizate is prepared in the presence of a catalyst complex of an organoaluminum compound with neodymium compounds, using at least one branching agent containing at least one tin atom.

2. The polymer composition according to claim 1, **characterized in that** the chain-end modifier is a compound selected from the group of cyclosilanes and oxacyclosilanes, preferably the chain-end modifier is selected from hexamethylcyclotrisiloxane, octamethylcyclotetrasiloxane, decamethylpentacyclosiloxane, propylmethacrylate-heptabutyl-cyclosiloxane, 1,3-glycidylpropo-heptane-isobutyl-cyclosiloxane, 1,1-dimethyl-1-sila-2-oxacyclosiloxane, and 2,2,4-trimethyl-1-oxa-4-aza-2-silacyclohexane, most preferably the chain-end modifier is selected from octamethylcyclotetrasiloxane and 1,1-dimethyl-1-sila-2-oxacyclosiloxane.

3. The polymer composition according to claim 1, **characterized in that** the amount of the used modifier based on active lithium is 0.05 to 5 mol per 1 mol of active lithium, the most preferable amount of the used modifier based on active lithium is 0.1 to 1 mol per 1 mol of active lithium.

4. A polymer composition **characterized by** a low content of vinyl groups, used in rubber mixtures for the production of tires, the composition being a mixture of a butadiene-styrene polymerizate and a polybutadiene polymerizate at a weight ratio of 1:1, wherein the butadiene-styrene polymerizate is prepared using an electron donor additive (ED) comprising at least two heteroatoms, an aliphatic potassium alkoxide, an organolithium initiator and using a chain-end modifier containing at least one nitrogen atom, and wherein the polybutadiene polymerizate is prepared in the presence of a catalyst complex of an organoaluminum compound with neodymium compounds, using at least one branching agent containing at least one tin atom.

5. The polymer composition according to claim 4, **characterized in that** the chain-end modifier is a compound selected from the group of vinylpyridines, lactams, and nitriles, preferred as the chain-end modifier is N-methyl-epsilon-caprolactam, N-methylpyrrolidone, 2-vinylpyridine, 4-vinylpyridine, 3-dimethylaminopropionitrile, and 3-diethylaminopropionitrile, the most preferred as the chain-end modifier are 2-vinylpyridine and 3-diethylaminopropionitrile.

6. The polymer composition according to claim 4, **characterized in that** the amount of the used modifier based on active lithium is 0.1 to 6 mol per 1 mol of active lithium, the most preferable amount of the used modifier based on active lithium is 0.9 to 5 mol per 1 mol of active lithium.

7. The polymer composition according to claim 1 or 4, **characterized in that** the aliphatic potassium alkoxide is a compound of the formula ROK, wherein R is an aliphatic group that can be selected from straight- or branched-chain primary, secondary, or tertiary aliphatic groups.

8. The polymer composition according to claim 1 or 4, **characterized in that** the ED:ROK molar ratio is a range of 1:(0.1-3), respectively, the most preferable ED:ROK ratio is in a range of 1:(0.17-0.3).

9. The polymer composition according to claim 1 or 4, **characterized in that** the ED and ROK are fed simultaneously or separately in any order before feeding the organolithium initiator.

10. The polymer composition according to claim 1 or 4, **characterized in that** potassium amylate, potassium isoamylate, potassium tert-amylate, potassium hexanolate, potassium 2-methylhexanolate, potassium 2-ethylhexanolate, potassium heptanolate, potassium 2-methylheptanolate, potassium 2-ethylheptanolate, potassium octanolate, potassium lapromolat, including polyfunctional mixed potassium lapromolat-tetrahydrofurfurylates containing sodium and elements of Group 2 of the Periodic table are preferred as the potassium alkoxide.

11. The polymer composition according to claim 1 or 4, **characterized in that** compounds used as the ED are ethylene glycol dimethyl ether (monoglyme), diethylene glycol dimethyl ether (diglyme), 2,2-bis(2'-tetrahydrofuryl)propane (DTHFP), N,N,N',N'-tetramethylethylenediamine (TMEDA), methyl tetrahydrofurfuryl ether, ethyl tetrahydrofurfuryl ether, propyl tetrahydrofurfuryl ether, butyl tetrahydrofurfuryl ether, isopropyl tetrahydrofurfuryl ether, sec-butyl tetrahydrofurfuryl ether, isobutyl tetrahydrofurfuryl ether, tert-butyl tetrahydrofurfuryl ether, pentyl tetrahydrofurfuryl ether, hexyl tetrahydrofurfuryl ether, ethylene glycol tert-butyl methyl ether, ethylene glycol tert-butyl ethyl ether (EGTBEE), ditetrahydrofurfuryl ether, diethylene glycol diethyl ether, diethylene glycol dipropyl ether, diethylene glycol diisopropyl ether, diethylene glycol dibutyl ether, diethylene glycol diisobutyl ether, or mixtures thereof, preferred as the ED are ditetrahydrofurylpropane (DTHFP), N,N,N',N'-tetramethylethylenediamine (TMEDA), methyl tetrahydrofurfuryl ether, diethylene glycol dimethyl ether, ethylene glycol tert-butyl ethyl ether, and ditetrahydrofurfuryl ether, the most preferred as the ED are DTHFP and TMEDA.

12. The polymer composition according to claim 1 or 4, **characterized in that** the ED is used in an amount of between 0.01 and 0.3 mol per 1 mol of active lithium the ED is preferably used in an amount of 0.02 to 0.2 mol per 1 mol of active lithium, the ED is most preferably used in an amount of 0.03 to 0.1 mol per 1 mol of active lithium.

13. The polymer composition according to claim 1 or 4, **characterized in that** the branching agent is tin halide of formula $SnHal_2R_2$, $SnHal_3R$, or $SnHal_4$, wherein R = $C_1$-$C_{20}$alkyl, and Hal = F, Cl, Br, I in particular preferred as the branching agent are tin tetrachloride and tetrabromide, the most preferred as the branching agent is tin tetrachloride.

14. The polymer composition according to claim 1 or 4, **characterized in that** the branching agent is used in an amount of 0.2 to 1 mol per 1 mol of neodymium.

**15.** The polymer composition according to any one of claims 1 to 14, wherein the butadiene-styrene polymerizate is **characterized by** a 1,2-unit content between 18 and 24% and a bound styrene content between 30 and 40%, and wherein the polybutadiene polymerizate is **characterized by** a cis-1,4 unit content between 97 and 99%, a 1,2-unit content between 0.2 and 0.8%, and a trans-1,4 unit content between 1 and 1.5%, and wherein the composition is **characterized by** a Mooney viscosity of 60 to 80 c.u., a bound styrene content between 17 and 19%, and a 1,2-unit content between 8 and 12%.

**16.** A method for preparing a polymer composition according to any one of claims 1 to 15, comprising mixing butadiene-styrene polymerizate and polybutadiene polymerizate at a weight ratio of 1:1 in a device equipped with a stirrer, at a temperature of 70 to 100°C for 20 to 40 minutes.

**17.** Use of a polymer composition having a low content of vinyl groups, according to any one of claims 1 to 15 in rubber mixtures for the production of tires.

**18.** The use according to claim 17, wherein the composition is used in rubber mixtures for the manufacture of truck tires.

**19.** Rubber mixtures for the production of truck tires, comprising a polymer composition having a low content of vinyl groups, according to any one of claims 1 to 15, and appropriate additives.

**20.** A tire made of the rubber mixture according to claim 19.

**21.** The tire according to claim 20, wherein the tire is a truck tire.

**Patentansprüche**

**1.** Polymerzusammensetzung, **gekennzeichnet durch** einen geringen Gehalt an Vinylgruppen, zur Verwendung in Kautschukmischungen zur Herstellung von Reifen, wobei die Zusammensetzung eine Mischung aus einem Butadien-Styrol-Polymerisat und einem Polybutadien-Polymerisat in einem Gewichtsverhältnis von 1:1 ist, wobei das Butadien-Styrol-Polymerisat unter Verwendung eines Elektronendonatoradditivs (ED) mit mindestens zwei Heteroatomen, einem aliphatischen Kaliumalkoxid, einem Organolithiuminitiator und unter Verwendung eines Kettenendmodifikators, ausgewählt aus der Gruppe der Verbindungen, die mindestens ein Sauerstoffatom und ein Siliciumatom enthalten, und wobei das Polybutadienpolymerisat in Gegenwart eines Katalysatorkomplexes aus einer Organoaluminiumverbindung mit Neodymverbindungen unter Verwendung mindestens eines Verzweigungsmittels, das mindestens ein Zinnatom enthält, hergestellt wird.

**2.** Die Polymerzusammensetzung gemäß Anspruch 1, **dadurch gekennzeichnet, dass** der 1-Kettenendmodifikator eine Verbindung ist, die aus der Gruppe der Cyclosilane und Oxacyclosilane ausgewählt ist, wobei der Kettenendmodifikator vorzugsweise aus Hexamethylcyclotrisiloxan, Octamethylcyclotetrasiloxan, Decamethylpentacyclosiloxan, Propylmethacrylat-Heptabutyl-Cyclosiloxan, 1,3-Glycidylpropoheptan-isobutyl-cyclosiloxan, 1,1-Dimethyl-1-sila-2-oxacyclosiloxan und 2,2,4-Trimethyl-1-oxa-4-aza-2-silacyclohexan ausgewählt ist, wobei der Kettenendmodifikator am bevorzugtesten aus Octamethylcyclotetrasiloxan und 1,1-Dimethyl-1-sila-2-oxacyclosiloxan ausgewählt ist.

**3.** Polymerzusammensetzung nach Anspruch 1, **dadurch gekennzeichnet, dass** die Menge des verwendeten Modifikators, bezogen auf aktives Lithium, 0,05 bis 5 Mol pro 1 Mol aktives Lithium beträgt, wobei die bevorzugte Menge des verwendeten Modifikators, bezogen auf aktives Lithium, 0,1 bis 1 Mol pro 1 Mol aktives Lithium beträgt.

**4.** Polymerzusammensetzung, **gekennzeichnet durch** einen geringen Gehalt an Vinylgruppen, zur Verwendung in Kautschukmischungen zur Herstellung von Reifen, wobei die Zusammensetzung eine Mischung aus einem Butadien-Styrol-Polymerisat und einem Polybutadien-Polymerisat in einem Gewichtsverhältnis von 1:1 ist, wobei das Butadien-Styrol-Polymerisat unter Verwendung eines Elektronendonatoradditivs (ED) mit mindestens zwei Heteroatomen, einem aliphatischen Kaliumalkoxid, einem Organolithiuminitiator und unter Verwendung eines mindestens ein Stickstoffatom enthaltenden Kettenendmodifikators hergestellt wird, und wobei das Polybutadienpolymerisat in Gegenwart eines Katalysatorkomplexes aus einer Organoaluminiumverbindung mit Neodymverbindungen unter Verwendung mindestens eines mindestens ein Zinnatom enthaltenden Verzweigungsmittels hergestellt wird.

5. Polymerzusammensetzung nach Anspruch 4, **dadurch gekennzeichnet, dass** der Kettenendmodifikator eine Verbindung ist, die aus der Gruppe der Vinylpyridine, Lactame und Nitrile ausgewählt ist, wobei als Kettenendmodifikator vorzugsweise N-Methyl-epsilon-caprolactam, N-Methylpyrrolidon, 2-Vinylpyridin, 4-Vinylpyridin, 3-Dimethylaminopropionitril und 3-Diethylaminopropionitril, wobei als Kettenendmodifikator 2-Vinylpyridin und 3-Diethylaminopropionitril am meisten bevorzugt sind.

6. Polymerzusammensetzung nach Anspruch 4, **dadurch gekennzeichnet, dass** die Menge des verwendeten Modifikators auf Basis von aktivem Lithium 0,1 bis 6 Mol pro 1 Mol aktivem Lithium beträgt, wobei die bevorzugte Menge des verwendeten Modifikators auf Basis von aktivem Lithium 0,9 bis 5 Mol pro 1 Mol aktivem Lithium beträgt.

7. Polymerzusammensetzung nach Anspruch 1 oder 4, **dadurch gekennzeichnet, dass** das aliphatische Kaliumalkoxid eine Verbindung der Formel ROK ist, wobei R eine aliphatische Gruppe ist, die aus geradkettigen oder verzweigten primären, sekundären oder tertiären aliphatischen Gruppen ausgewählt sein kann.

8. Polymerzusammensetzung nach Anspruch 1 oder 4, **dadurch gekennzeichnet, dass** das Molverhältnis ED:ROK in einem Bereich von 1 :(0,1-3) liegt, wobei das bevorzugte ED:ROK-Verhältnis in einem Bereich von 1 :(0,17-0,3) liegt.

9. Polymerzusammensetzung nach Anspruch 1 oder 4, **dadurch gekennzeichnet, dass** ED und ROK gleichzeitig oder getrennt in beliebiger Reihenfolge vor der Zugabe des Organolithiuminitiators zugeführt werden.

10. Polymerzusammensetzung nach Anspruch 1 oder 4, **dadurch gekennzeichnet, dass** Kaliumamylat, Kaliumisamylat, Kalium-tert-amylat, Kaliumhexanolat, Kalium-2-methylhexanolat, Kalium-2-ethylhexanolat, Kaliumheptanolat, Kalium-2-methylheptanolat, Kalium-2-ethylheptanolat, Kaliumoctanolat, Kaliumlapromolat, einschließlich polyfunktioneller gemischter Kaliumlapromolat-Tetrahydrofurfurylate, die Natrium und Elemente der Gruppe 2 des Periodensystems enthalten, als Kaliumalkoxid bevorzugt sind.

11. Polymerzusammensetzung nach Anspruch 1 oder 4, **dadurch gekennzeichnet, dass** als ED verwendete Verbindungen Ethylenglykoldimethylether (Monoglyme), Diethylenglykoldimethylether (Diglyme), 2,2-Bis(2'-tetrahydrofuryl)propan (DTHFP), N,N,N',N'-tetramethylethylendiamin (TMEDA), Methyltetrahydrofurfuryläther, Ethyltetrahydrofurfuryläther, Propyl-tetrahydrofurfuryläther, Butyltetrahydrofurfuryläther, Isopropyltetrahydrofurfuryläther, sec-Butyltetrahydrofurfuryläther, Isobutyltetrahydrofurfuryläther, tert-Butyltetrahydrofurfuryläther, Pentyltetrahydrofurfuryläther, Hexyltetrahydrofurfuryläther, Ethylenglycol-tert-butylmethylether, Ethylenglycol-tert-butylethylether (EGTBEE), Ditetrahydrofurfuryl-Ether, Diethylenglykoldiethyl-Ether, Diethylenglykoldipropyl-Ether, Diethylenglykol-diisopropyl-Ether, Diethylenglykoldibutyl-Ether, Diethylenglykol-diisobutyl-Ether oder Mischungen davon, bevorzugt als ED sind Ditetrahydrofurylpropan (DTHFP), N,N,N',N'-Tetramethylethylendiamin (TMEDA), Methyltetrahydrofurfuryl-ether, Diethylen glykoldimethylether, Ethylenglykol-tert-butylethyl-ether und Ditetrahydrofurfuryl-ether, wobei DTHFP und TMEDA als ED am meisten bevorzugt sind.

12. Die Polymerzusammensetzung gemäß Anspruch 1 oder 4, **dadurch gekennzeichnet, dass** der ED in einer Menge zwischen 0,01 und 0,3 Mol pro 1 Mol aktivem Lithium verwendet wird, wobei der ED vorzugsweise in einer Menge von 0,02 bis 0,2 Mol pro 1 Mol aktivem Lithium verwendet wird und der ED am bevorzugtesten in einer Menge von 0,03 bis 0,1 Mol pro 1 Mol aktivem Lithium verwendet wird.

13. Polymerzusammensetzung nach Anspruch 1 oder 4, **dadurch gekennzeichnet, dass** das Verzweigungsmittel ein Zinnhalogenid der Formel $SnHal_2R_2$, $SnHal_3R$ oder $SnHal_4$ ist, wobei R = $C_1$-$C_{20}$-Alkyl und Hal = F, Cl, Br, I, wobei als Verzweigungsmittel insbesondere Zinn-Tetrachlorid und Tetrabromid bevorzugt sind und als Verzweigungsmittel Zinn-Tetrachlorid am meisten bevorzugt ist.

14. Polymerzusammensetzung nach Anspruch 1 oder 4, **dadurch gekennzeichnet, dass** das Verzweigungsmittel in einer Menge von 0,2 bis 1 Mol pro 1 Mol Neodym verwendet wird.

15. Polymerzusammensetzung nach einem der Ansprüche 1 bis 14, wobei das Butadien-Styrol-Polymerisat durch einen 1,2-Einheitsgehalt zwischen 18 und 24 % und einen gebundenen Styrolgehalt zwischen 30 und 40 % gekennzeichnet ist und wobei das Polybutadien-Polymerisat durch einen cis-1,4-Einheitsgehalt zwischen 97 und 99 %, einem 1,2-Einheitsgehalt zwischen 0,2 und 0,8 % und einem trans-1,4-Einheitsgehalt zwischen 1 und 1,5 % gekennzeichnet ist, und wobei die Zusammensetzung durch eine Mooney-Viskosität von 60 bis 80 c.u., einen gebundenen Styrolgehalt zwischen 17 und 19 % und einen 1,2-Einheitsgehalt zwischen 8 und 12 % gekennzeichnet ist.

**16.** Verfahren zur Herstellung einer Polymerzusammensetzung nach einem der Ansprüche 1 bis 15, umfassend das Mischen von Butadien-Styrol-Polymerisat und Polybutadien-Polymerisat in einem Gewichtsverhältnis von 1:1 in einer mit einem Rührer ausgestatteten Vorrichtung bei einer Temperatur von 70 bis 100 °C für 20 bis 40 Minuten.

**17.** Verwendung einer Polymerzusammensetzung mit einem geringen Gehalt an Vinylgruppen gemäß einem der Ansprüche 1 bis 15 in Kautschukmischungen zur Herstellung von Reifen.

**18.** Verwendung gemäß Anspruch 17, wobei die Zusammensetzung in Kautschukmischungen zur Herstellung von Lkw-Reifen verwendet wird.

**19.** Kautschukmischungen zur Herstellung von Lkw-Reifen, umfassend eine Polymerzusammensetzung mit einem geringen Gehalt an Vinylgruppen gemäß einem der Ansprüche 1 bis 15 und geeignete Additive.

**20.** Reifen aus der Kautschukmischung gemäß Anspruch 19.

**21.** Reifen gemäß Anspruch 20, wobei der Reifen ein Lkw-Reifen ist.


**Revendications**

**1.** Composition polymère **caractérisée par** une faible teneur en groupes vinyliques, utilisée dans des mélanges de caoutchouc pour la fabrication de pneumatiques, la composition étant un mélange d'un polymérisat de butadiène-styrène et d'un polymérisat de polybutadiène dans un rapport pondéral de 1:1, dans laquelle le polymérisat de butadiène-styrène est préparé à l'aide d'un additif donneur d'électrons (ED)
comprenant au moins deux hétéroatomes, un alcoolate de potassium aliphatique, un initiateur organolithien et en utilisant un modificateur de bout de chaîne choisi dans le groupe des composés contenant au moins un atome d'oxygène et un atome de silicium, et dans laquelle le polymérisat de polybutadiène est préparé en présence d'un complexe catalytique d'un composé organoaluminique avec des composés de néodyme, en utilisant au moins un agent de ramification contenant au moins un atome d'étain.

**2.** La composition polymère, selon la revendication 1, **caractérisée en ce que** le modificateur d'extrémité de chaîne est un composé choisi dans le groupe des cyclosilanes et des oxacyclosilanes, de préférence le modificateur d'extrémité de chaîne est choisi parmi l'hexaméthylcyclotrisiloxane, l'octaméthylcyclotétrasiloxane, le décaméthylpentacyclosiloxane, le propylméthacrylate-heptabutyl-cyclosiloxane, 1,3-glycidylpropo-heptane-isobutyl-cyclosiloxane, 1,1-diméthyl-1-sila-2-oxacyclosiloxane et 2,2,4-triméthyl-1-oxa-4-aza-2-silacyclohexane, le modificateur d'extrémité de chaîne étant de préférence choisi parmi l'octaméthylcyclotétrasiloxane et le 1,1-diméthyl-1-sila-2-oxacyclosiloxane.

**3.** Composition polymère selon la revendication 1, **caractérisée en ce que** la quantité de modificateur utilisé, sur la base du lithium actif, est comprise entre 0,05 et 5 mol pour 1 mol de lithium actif, la quantité la plus préférée de modificateur utilisé, sur la base du lithium actif, étant comprise entre 0,1 et 1 mol pour 1 mol de lithium actif.

**4.** Composition polymère **caractérisée par** une faible teneur en groupes vinyliques, utilisée dans des mélanges de caoutchouc pour la fabrication de pneumatiques, la composition étant un mélange d'un polymérisat de butadiène-styrène et d'un polymérisat de polybutadiène dans un rapport pondéral de 1:1, dans laquelle le polymérisat de butadiène-styrène est préparé à l'aide d'un additif donneur d'électrons (ED)
comprenant au moins deux hétéroatomes, un alcoolate de potassium aliphatique, un initiateur organolithien et en utilisant un modificateur de chaîne contenant au moins un atome d'azote, et dans laquelle le polymérisat de polybutadiène est préparé en présence d'un complexe catalytique d'un composé organoaluminique avec des composés de néodyme, en utilisant au moins un agent de ramification contenant au moins un atome d'étain.

**5.** Composition polymère selon la revendication 4, **caractérisée en ce que** le modificateur d'extrémité de chaîne est un composé choisi dans le groupe des vinylpyridines, des lactames et des nitriles, de préférence le modificateur d'extrémité de chaîne étant le N-méthyl-epsilon-caprolactame, la N-méthylpyrrolidone, la 2-vinylpyridine, la 4-vinylpyridine, le 3-diméthylaminopropionitrile et le 3-diéthylaminopropionitrile, les modificateurs d'extrémité de chaîne les plus préférés étant la 2-vinylpyridine et le 3-diéthylaminopropionitrile.

**6.** Composition polymère selon la revendication 4, **caractérisée en ce que** la quantité de modificateur utilisé à base de lithium actif est comprise entre 0,1 et 6 moles pour 1 mole de lithium actif, la quantité la plus préférable de modificateur utilisé à base de lithium actif étant comprise entre 0,9 et 5 moles pour 1 mole de lithium actif.

7. Composition polymère selon la revendication 1 ou 4, **caractérisée en ce que** l'alkoxyde de potassium aliphatique est un composé de formule ROK, dans laquelle R est un groupe aliphatique qui peut être choisi parmi les groupes aliphatiques primaires, secondaires ou tertiaires à chaîne droite ou ramifiée.

8. Composition polymère selon la revendication 1 ou 4, **caractérisée en ce que** le rapport molaire ED:ROK est compris dans une plage de 1: (0,1-3), le rapport ED:ROK le plus préférable étant compris dans une plage de 1: (0,17-0,3).

9. Composition polymère selon la revendication 1 ou 4, **caractérisée en ce que** l'ED et le ROK sont introduits simultanément ou séparément dans n'importe quel ordre avant l'introduction de l'initiateur organolithien.

10. Composition polymère selon la revendication 1 ou 4, **caractérisée en ce que** l'amylate de potassium, l'isoamylate de potassium, le tert-amylate de potassium, l'hexanolate de potassium, le 2-méthylhexanolate de potassium, 2-éthylhexanolate de potassium, l'heptanolate de potassium, le 2-méthylheptanolate de potassium, le 2-éthylheptanolate de potassium, l'octanolate de potassium, le lapromolate de potassium, y compris les lapromolates de potassium mixtes polyfonctionnels-tétrahydrofurfurylates contenant du sodium et des éléments du groupe 2 du tableau périodique, sont préférés comme alcoolates de potassium.

11. Composition polymère selon la revendication 1 ou 4, **caractérisée en ce que** les composés utilisés comme ED sont l'éther diméthylique d'éthylène glycol (monoglyme), l'éther diméthylique de diéthylène glycol (diglyme), le 2,2-bis(2'-tétrahydrofuryl)propane (DTHFP), la N,N,N',N'-tétraméthyléthylènediamine (TMEDA), méthyl tétrahydrofurfuryl éther, éthyl tétrahydrofurfuryl éther, propyl tétrahydrofurfuryl éther, butyl tétrahydrofurfuryl éther, tétrahydrofurfuryl éther isopropylique, tétrahydrofurfuryl éther sec-butylique, tétrahydrofurfuryl éther isobutylique, tétrahydrofurfuryl éther tert-butylique, tétrahydrofurfuryl éther pentylique, tétrahydrofurfuryl éther hexyle, éthylène glycol tert-butyl méthyl éther, éthylène glycol tert-butyl éthyl éther (EGTBEE), éther ditétrahydrofurfurylique, éther diéthylène glycol diéthyle, éther diéthylène glycol dipropyle, éther diéthylène glycol diisopropyle, éther diéthylène glycol dibutyle, éther diéthylène glycol diisobutyle, ou leurs mélanges, de préférence comme ED sont le ditétrahydrofurylpropane (DTHFP), N,N,N',N'-tétraméthyléthylènediamine (TMEDA), méthyl tétrahydrofurfuryl éther, diéthylène glycol diméthyl éther, éthylène glycol tert-butyl éthyl éther et ditétrahydrofurfuryl éther, les plus préférés comme ED étant le DTHFP et le TMEDA.

12. La composition polymère selon la revendication 1 ou 4, **caractérisée en ce que** l'ED est utilisé en une quantité comprise entre 0,01 et 0,3 mole par mole de lithium actif, l'ED étant de préférence utilisé en une quantité comprise entre 0,02 et 0,2 mole par mole de lithium actif, l'ED étant de préférence utilisé en une quantité comprise entre 0,03 et 0,1 mole par mole de lithium actif.

13. Composition polymère selon la revendication 1 ou 4, **caractérisée en ce que** l'agent de ramification est un halogénure d'étain de formule $SnHal_2R_2$, $SnHal_3R$ ou $SnHal_4$, dans laquelle R = alkyle en $C_1$-$C_{20}$ et Hal = F, Cl, Br, I, le tétrachlorure d'étain et le tétrabromure d'étain étant particulièrement préférés comme agents de ramification, le tétrachlorure d'étain étant le plus préféré comme agent de ramification.

14. Composition polymère selon la revendication 1 ou 4, **caractérisée en ce que** l'agent de ramification est utilisé en une quantité de 0,2 à 1 mole pour 1 mole de néodyme.

15. Composition polymère selon l'une quelconque des revendications 1 à 14, dans laquelle le polymère de butadiène-styrène est **caractérisé par** une teneur en unités 1,2 comprise entre 18 et 24 % et une teneur en styrène lié comprise entre 30 et 40 %, et dans laquelle le polymère de polybutadiène est **caractérisé par** une teneur en unités cis-1,4 comprise entre 97 et 99 %, une teneur en unités 1,2 comprise entre 0,2 et 0,8 %, et une teneur en unités trans-1,4 comprise entre 1 et 1,5 %, et dans laquelle la composition est **caractérisée par** une viscosité Mooney de 60 à 80 c.u., une teneur en styrène lié comprise entre 17 et 19 %, et une teneur en unités 1,2 comprise entre 8 et 12 %.

16. Procédé de préparation d'une composition polymère selon l'une quelconque des revendications 1 à 15, comprenant le mélange d'un polymérisat de butadiène-styrène et d'un polymérisat de polybutadiène dans un rapport pondéral de 1:1 dans un dispositif équipé d'un agitateur, à une température de 70 à 100 °C pendant 20 à 40 minutes.

17. Utilisation d'une composition polymère à faible teneur en groupes vinyliques, selon l'une quelconque des revendications 1 à 15, dans des mélanges de caoutchouc pour la fabrication de pneumatiques.

**18.** Utilisation selon la revendication 17, dans laquelle la composition est utilisée dans des mélanges de caoutchouc pour la fabrication de pneumatiques pour camions.

**19.** Mélanges de caoutchouc pour la fabrication de pneus de camion, comprenant une composition polymère à faible teneur en groupes vinyliques, selon l'une quelconque des revendications 1 à 15, et des additifs appropriés.

**20.** Pneu fabriqué à partir du mélange de caoutchouc selon la revendication 19.

**21.** Pneu selon la revendication 20, dans lequel le pneu est un pneu de camion.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5395891 A
- US 5886086 A
- US 2016145418 A
- US 6359045 B
- US 2004261927 A
- US 4946887 A
- US 8383711 B
- US 2014100334 A1
- US 2017327601 A
- RU 2235105

- RU 2502754
- RU 2635803
- EP 0601611 A1
- SU 1001671
- RU 2487137
- RU 2565706
- US 6228908 B
- EP 2452951 A
- RU 2626967
- RU 2439101